# EUROPEAN PATENT SPECIFICATION

(11) **EP 3 331 778 B1**
(45) Date of publication and mention of the grant of the patent: **12.08.2020**
(21) Application number: 16745045.1
(22) Date of filing: 08.07.2016
(51) Int. Cl.: B65D 88/12, B65D 90/00

(54) **A TRANSPORTATION SYSTEM FOR TRANSPORTATION OF LARGE ITEMS AND USE THEREOF**
TRANSPORTSYSTEM ZUM TRANSPORT GROSSER ARTIKEL UND VERWENDUNG DAVON
SYSTÈME DE TRANSPORT POUR LE TRANSPORT DE GRANDS OBJETS ET UTILISATION DE CELUI-CI

(30) Priority: 05.08.2015 DK 201500442
(43) Date of publication of application: 13.06.2018
(73) Proprietor: Viggo Jespersen Holding APS, 5881 Skaarup (DK)
(72) Inventor: JESPERSEN, Viggo, 5881 Skårup Fyn (DK)
(74) Representative: Skov, Anders
(86) International application number: PCT/DK2016/050241
(87) International publication number: WO 2017/020911

(56) References cited:
- EP-A1- 1 967 466
- WO-A1-2012/146245
- JP-A- S 649 189
- JP-A- H06 100 075
- JP-U- S56 118 886
- US-A- 3 460 684

## Description

### Field of the invention

The present invention relates in a first aspect to a transportation system for transportation of large items in the form flanges. In a second aspect the present invention relates to the use of a transportation system according to the first aspect for transportation of said large items.

### Background of the invention

Within the wind turbine industry, it well-known that the individual elements used for a wind turbine often are being manufactured at locations far away from the site on which the wind turbine is to be set up. This implies that certain challenges are encountered during transportation from the production site for the individual elements and the site itself of setting up of the wind turbine. This is not at least true in relation to large items in the form of flanges which are to be used for the erect wind turbine. These challenges in particular relate to difficulties and thereby associated expenses during transport of these large elements or items.

One example of a large element or item, which is used for erect wind turbines are flanges connecting the wind turbine tower with the wind turbine foundation. A flange for a wind turbine is usually manufactured from steel and comprises a circular ring in which the flange between the inner periphery and the outer periphery is provided with a plurality of through-going holes, whereby bolts may maintain the flange in a fastened configuration.

Flanges for wind turbines currently have an outer diameter of up to 9 m.

Various systems for transportation of flanges for wind turbines are known. Traditionally it has been common practice to transport flanges for wind turbines on a frame in a lying down or horizontally oriented configuration. In line with the ever increasing sizes of new wind turbine types also the flanges to be used will increase in size and thereby this horizontally oriented configuration of the flanges during transport becomes inconvenient, as the flanges in this orientation take up too much space during transport and during storing or storage.

WO 2012/146245 A1 discloses a system for transportation of flanges for wind turbines. This system comprises a frame having a rectangular shape. The frame comprises two longitudinal beams between which are arranged a number of support bars in a transversal direction. The support bars are configured for supporting a number of flanges which are vertically arranged in an orientation in such a way that their horizontal diameter is being parallel to the longitudinal beams. The individual flanges are being bolted together with threaded bars and moreover, the flanges are tethered to the frame using chains, rope or the like. It is mentioned in this document that the frame itself may be arranged on top of a pair of U-profiles during transport. The total height of the transportation system, including flanges, in this transportation system thereby becomes the height of the flanges plus the height of the U-profiles. Although this document is occupied with the problem of minimizing space during storage and transport of large items in the form of flanges, this document does not disclose or suggest technical means that allows safe transport of flanges having different sizes so that the smaller flanges are arranged within larger flanges.

JP S56 118 886 discloses a system for transportation of large items in the form of tires. The system comprises a frame comprising supports for supporting the tires. The system disclosed in this document allows for changing the distance between supports and thereby allows supporting tires of varying sizes.

JP H06 100 075 A discloses a system for transportation of large items in the form of sheet metal reels. The system comprises a frame carrying support beams for supporting the reels. The system disclosed in this document is having dimensions and locking mechanism corresponding to a standard freight container.

None of the two latter documents disclose or suggest technical means that allows safe transport of flanges having different sizes so that the smaller flanges are arranged within larger flanges.

In particular in relation to shipment by ship, the total volume of the shipped cargo is of importance, as payment typically is calculated on the basis of volume, irrespective of weight.

Within the field of container freight, the term "slot" is used. A "slot" designates a payment unit of the cargo to be shipped, a standard 6,1 meter container defining a volume of 1 "slot". A standard 12 meter container accordingly takes up a volume of 2 "slots".

In an event where the cargo to be shipped takes up more space in height than what corresponds to a 6,1 meter container, payment is being made in a way where the shipped volume is being added additional slots in height corresponding to the number of 6,1 meter container space this cargo takes up in height.

Accordingly, cargo which in length takes up space corresponding to a 6,1 meter container and which in height corresponds to 1.5 times the height of a 6,1 meter container will be settled as taking up 2 slots (2 slots in height and 1 slot lengthwise). Similarly, cargo which in length takes up space corresponding to a 12 meter container and which in height corresponds to 2.5 times the height of a 12 meter container (having the same height as a 6,1 meter container) will be settled as taking up 6 slots (3 slots in height and 2 slots lengthwise).

Accordingly, it is clear that when large elements or items are being transported as container freight it is of paramount importance for transport economy and thereby also for the total economy associated with the large elements or items that volume of the transported cargo is kept at a minimum.

Hence, a need persists for an improved transportation system for transportation of large items in the form of flanges, for example for wind turbines, which allows transport of the large items while taking up a minimum of space.

It is an objective of the present invention to provide such transportation systems.

### Kort beskrivelse af den foreliggende opfindelse

This objective is fulfilled with the present invention in its first and second aspect, respectively.

Accordingly, the present invention in its first aspect relates to a transportation system for transportation of large items in the form of flanges, wherein said transportation system comprises:
a frame having an extension in a longitudinal direction, in a transversal direction and in a vertical direction;
wherein said frame comprises two longitudinal girders, which are connected to a plurality of pairs of primary support beams;
wherein said longitudinal girders comprise a lower surface and an upper surface;
wherein said transversal primary support beams comprise an upper surface;
wherein said primary support beams are being arranged on an upper part of said longitudinal girders;
wherein the area between two transversal primary support beams defines a storage area for said large items;
wherein free access in a downward direction, all the way down to the height of the lower surface of the longitudinal girders, is provided in the storage area for the large items;
wherein the lower part of the frame is having dimensions and locking mechanisms corresponding to a freight container; thereby allowing the transportation system to be arranged and locked in place safely on top of a freight container
characterized in that the frame comprises a number of pairs of brackets for accommodating secondary support beams; and
that each bracket is being arranged opposite to another on its respective longitudinal girder at a position in a longitudinal direction X, corresponding to said storage area for the large items; and
that each pair of brackets comprises a number of cavities which are being arranged in a longitudinal direction X for accommodating an end of a secondary support beam; and
that the number of pairs of brackets is being 2 or more in respect of each storage area for the large items; and
that said transportation system furthermore comprising one or more pairs of secondary support beams;
thereby allowing storage and transportation of two sizes of flanges in such a way that the larger flanges are resting on a pair of primary support beams, and the smaller flanges being arranged within the larger flanges, wherein the smaller flanges are resting on a pair of these secondary support beams.

The present invention relates in its second aspect to the use of a transportation system according the first aspect of the invention for transportation of large items in the form of flanges.

With the present invention in its first and second aspect, respectively, it can be attained that large items in the form of flanges for wind turbines may be transported and stored, while taking up a minimum of space.

By using the transportation system according to the first aspect of the invention large harbour cranes may lift large items in the form of flanges, off ships just like an ordinary container, the large items being arranged on a frame allowing such lift. Subsequently ordinary container movers may move around the flanges on the dock for the purpose of further transportation.

### Brief description of the figures

Fig. 1 shows an embodiment of a transportation system according to the present invention, as seen from above.
Fig. 2 shows the embodiment of fig. 1 in a cross-sectional view.
Fig. 3a shows an embodiment of a transportation system according to the present invention during storage of flanges, as seen in a side view.
Fig. 3b shows the embodiment of fig. 3a, as seen from above.
Fig. 3c shows the embodiment of fig. 3a, as seen in an end view.
Fig. 4a shows an embodiment of a secondary support beam for use with the transportation system according to the present invention, as seen in a side view.
Fig. 4b shows the embodiment of fig. 4a, as seen from above.
Fig. 4c shows the embodiment of fig. 4a, as seen in an end view.
Fig. 5a shows an embodiment of a transportation system according to the present invention during storage of flanges, as seen in a side view.
Fig. 5b shows the embodiment of fig. 5a, as seen from above.
Fig. 5c shows the embodiment of fig. 5a, as seen in an end view.

### Detailed description of the present invention

The first aspect of the present invention relates to a transportation system for transportation of large items in the form of flanges, wherein said transportation system comprises:
a frame having an extension in a longitudinal direction, in a transversal direction and in a vertical direction;
wherein said frame comprises two longitudinal girders, which are connected to a plurality of pairs of primary support beams;
wherein said primary support beams are being arranged on an upper part of said longitudinal girders;
wherein said longitudinal girders comprise a lower surface and an upper surface;
wherein said transversal primary support beams comprise an upper surface;
wherein the area between two transversal primary support beams defines a storage area for said large items;
wherein free access in a downward direction, all the way down to the height of the lower surface of the longitudinal girders, is provided in the storage area for the large items;
wherein the lower part of the frame is having dimensions and locking mechanisms corresponding to a freight container; thereby allowing the transportation system to be arranged and locked in place safely on top of a freight container;
characterized in that the frame comprises a number of pairs of brackets for accommodating secondary support beams; and
that each bracket is being arranged opposite to another on its respective longitudinal girder at a position in a longitudinal direction X, corresponding to said storage area for the large items; and
that each pair of brackets comprises a number of cavities which are being arranged in a longitudinal direction X for accommodating an end of a secondary support beam; and
that the number of pairs of brackets is being 2 or more in respect of each storage area for the large items; and
that said transportation system furthermore comprising one or more pairs of secondary support beams;
thereby allowing storage and transportation of two sizes of flanges in such a way that the larger flanges are resting on a pair of primary support beams, and the smaller flanges being arranged within the larger flanges, wherein the smaller flanges are resting on a pair of these secondary support beams.

With the transportation system according to the first aspect of the present invention it is possible in an easy and space saving way to store and transport large items in the form of flanges for wind turbines.

In the present description and in the appended claims the terms large elements or large items shall be understood to mean elements or items, which in their largest extension are having an extension of 3 m or more, such as 4 meters or more, for example 5 meters or more, such as 6 meters or more, for example 7 m or more, such as 8 m or more, or even 9 m or more.

In the present description and in the appended claims the term large elements or large items are specifically to be understood as being flanges for wind turbines.

A flange for a wind turbine is in the present description and in the appended claims is to be understood as a (compared to its other dimensions) relative flat, ring shaped element having a through-going hole in its centre. Accordingly, a flange is delimited by an inner periphery and an outer periphery. Between the inner and the outer periphery are typically arranged a number of through-going holes for accommodation of bolts for the purpose of fastening the flange. The number of through-going holes may be 10 - 200 or more, such as 20 - 190, e.g. 30 - 180, such as 40 -170, e.g. 50 - 160, such as 60 - 150, e.g. 70 - 140, such as 80 - 130, e.g. 90 - 120 or 100 - 110.

The saving of space which is attained during storage and transport of especially flanges using the transportation system according to the first aspect of the present invention is brought about in that the flanges are resting on the transversal primary support beams which are arranged on an upper part of the longitudinal girders. Hereby is assured that the lower part of the flange, in the storage area between two primary support beams, is extending downward, preferably all the way down to the height of the lower surface of the longitudinal girders. Hereby space is saved in a vertical direction.

In order for this to take place, it is a requirement that the storage area between two primary support beams are providing free access to flanges, downwardly.

With the term "free access downwardly" shall in the present description and in the appended claims be understood that the storage area between two primary support beams is not obstructed or blocked by constructional elements or other parts which may prevent placement of flanges between two primary support beams in a way so that a lower part of the flange is extending downwardly towards the plane which is defined by the lower surfaces of the longitudinal girders.

In a preferred embodiment of the transportation system according to the first aspect of the invention the upper surface of the primary support beams is being arranged on the longitudinal girders in a height corresponding to at least 50 %, such as 55 %, such as at least 60 %, for example at least 65 %, such as at least 70 %, for example at least 75 %, such as at least 80 %, such as at least 85 % or at least 90% of the extension, in a vertical direction, of the longitudinal girders.

In a preferred embodiment of the transportation system according to the first aspect of the invention the upper surface of the primary support beams is being arranged on the longitudinal girders in a height above the longitudinal girder's lower surface of 300 mm or more, such as 350 mm or more, such as 400 mm or more, for example 450 mm or more, such as 500 mm or more, such as 550 mm or more, for example 600 mm or more.

These heights of placement of the primary support beams ensure sufficient distance downwardly in a way so that a beneficial saving of space in a vertical direction may be achieved.

In a preferred embodiment of the transportation system according to the first aspect of the invention the number of pairs of primary support beams is being 1, 2, 3 or 4.

These numbers of primary support beams ensure easy and convenient transportation and storage of flanges having a size that currently are used for wind turbines.

In a preferred embodiment of the transportation system according to the first aspect of the invention the upper surface of each primary support beam is inclined inwardly towards the storage area for the large items.

Each of the primary support beams is preferably inclined inwardly towards the storage area for the large items at an angle, relative to horizontal, of 5 - 40°, such as 10 - 35°, for example 15 - 30°, such as 20 - 25°.

These inclinations of the upper surface of each primary support beam ensure a larger contact surface between the flange and the primary support beam, which in turn implies less mechanical stress on the surface of the flange.

In a preferred embodiment of the transportation system according to the first aspect of the invention the mutual distance, in a longitudinal direction, between the most proximal points on the upper surface of the primary support beams of a pair of support beams is being 2000 - 3500 mm, such as 2100 - 3400 mm, such as 2200 - 3300 mm, for example 2300 - 3200 mm, such as 2200 - 3100 mm, for example 2300 - 3000 mm, for example 2400 - 2900 mm, such as 2500 - 2800 mm or 2600 - 2700 mm.

These mutual distances ensure easy and convenient transportation and storage of flanges having a size currently used for wind turbines.

In a preferred embodiment of the transportation system according to the first aspect of the invention the extension, in a vertical direction, of the longitudinal girders is being 300 - 900 mm, such as 400 - 800 mm for example 500 - 600 mm.

These vertical extensions of the longitudinal girders enable sufficient distance downwardly for flanges being arranged on a pair of primary support beams in such a way that a favourable saving of space in a vertical direction is achieved.

In a preferred embodiment of the transportation system according to the first aspect of the invention the primary support beams are being arranged, in a longitudinal and vertical position, on the longitudinal girders in such a way that a flange which is being arranged vertically on the support beams and which is arranged in a longitudinal orientation, does not extend beyond the longitudinal extension of the frame, in a situation in which the flanges are having a diameter of up to 9 m.

Hereby safe and easy transportation and storage of flanges having a diameter of up to 9 m is ensured in that the flanges do not take up more space in a horizontal plane than a standard freight container.

In a preferred embodiment of the transportation system according to the first aspect of the invention the lower part of the frame is having dimensions and locking mechanisms corresponding to a standard freight container, such as a standard 6,1 meter or a standard 12 meter freight container, such as a "flat rack" container; such as conventionally and/or traditionally used for transportation by ship.

In a preferred embodiment of the transportation system according to the first aspect of the invention the transportation system, in relation to the dimensions and locking mechanism of the lower part of the frame, complies with the ISO 668:2013 standard and/or the ISO 1496-1:2013 standard.

Hereby is ensured that the transportation system according to the invention, during storage and transportation, may be stacked on top of other standard freight containers.

In a preferred embodiment of the transportation system according to the first aspect of the invention each secondary support beam comprises an H-profile having welded thereon cylindrical bars in each end thereof.

Hereby the secondary beams may rotate in their respective cavities, whereby maximizing contact surface between the surface of the secondary support beams and the surface of the flanges is obtained. This ensures minimizing the physical stress on the surface of the flanges.

In a preferred embodiment of the transportation system according to the first aspect of the invention the frame comprises a pair of storage beams for storing one or more pairs of secondary support beams; the storage beams preferably being arranged on the longitudinal girders at a position outside the storage area for the large items.

Hereby it is possible to store the secondary support beams together with the rest of the transportation system when the secondary support beams are not used.

In a preferred embodiment of the transportation system according to the first aspect of the invention the frame in its end(s) comprises one or two end wall(s).

In a preferred embodiment of the transportation system according to the first aspect of the invention the end wall(s) comprises means for pivoting said end wall(s) between a vertical, upright configuration and a horizontal, inwardly folded-down configuration and vice versa. Hereby the transportation system may be packed into a compact configuration for the purpose of saving storage space when not in use.

In a preferred embodiment of the transportation system according to the first aspect of the invention the end wall(s) is/are having dimensions and locking mechanism corresponding to a standard 6,1 meter or 12 meter freight container.

Hereby the transportation system may be lifted by the type of cranes usually employed for lifting freight containers.

In a preferred embodiment of the transportation system according to the first aspect of the invention each primary support beam of one or more pairs of primary support beams is being pivotally suspended, via pivoting mechanisms, such as suspension bearings, on said longitudinal girders in such a way that they are able to being rotated around their longitudinal axes.

Hereby an automatic maximization of the contact surface between the primary support beams and the surface of the flanges is ensured.

In a preferred embodiment of the transportation system according to the first aspect of the invention the transportation system comprising two primary support beams, wherein at least one primary support beam is being movably mounted on the longitudinal girders via fastening means therefor.

Such fastening means may for example comprise a number of threaded holes, displaced in a longitudinal direction on the longitudinal girders, and a number of bolts, whereby at least one of the primary support beams hereby may be bolted and fastened to the longitudinal girders.

Hereby is ensured that even flanges having a diameter of up to 9 m or more may be stored and transported with the transportation system according to the present invention.

In a preferred embodiment of the transportation system according to the first aspect of the invention the transportation system comprising a number of bolts or threaded bars, nuts and flexible fastening means, such as wires, chains, straps or ropes, wherein each bolt/threaded bar is being configured for fastening in through-going holes in one or more flanges, and wherein the fastening means are being configured for allowing fastening of one or more flanges, in an upright orientation, to the transportation system, when the flange(s) is/are resting on the transversal primary support beams and/or the secondary support beams.

Such means ensure safe and efficient fixing of the flanges in the transportation system.

The second aspect of the invention relates to a use of a transportation system according to the first aspect of the invention for transportation of large items in the form of flanges.

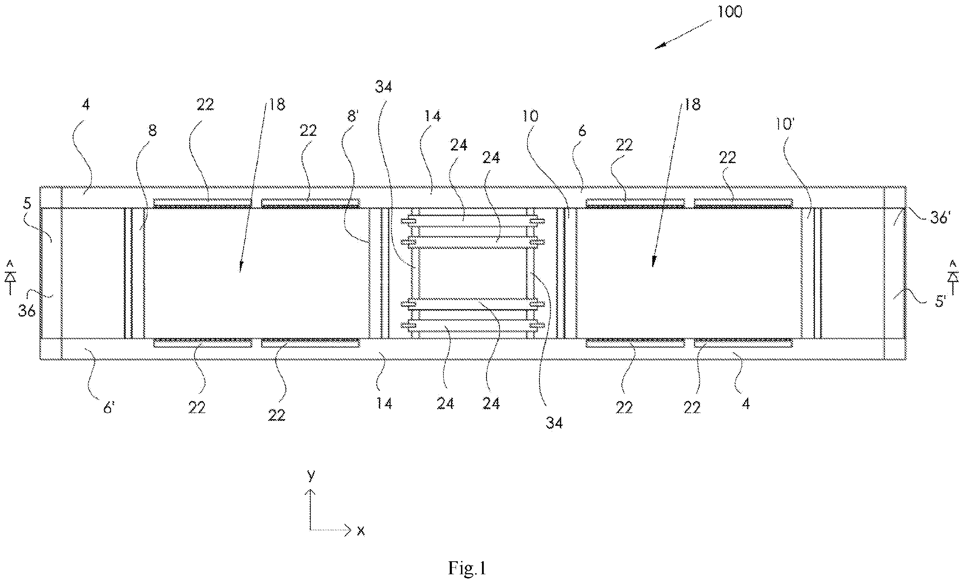

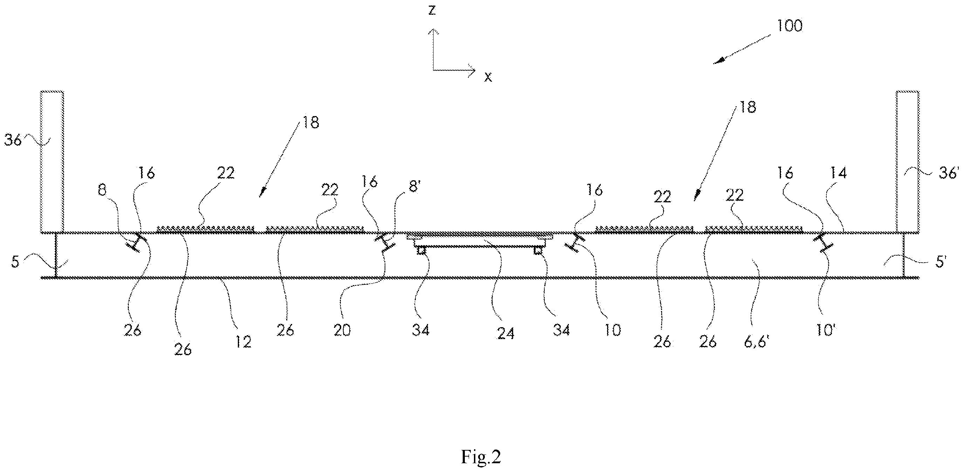

Referring now to the drawings for the purpose of illustrating the present invention, fig. 1 shows an embodiment of a transportation system according to the present invention as seen from above, and fig. 2 shows the same embodiment as seen in the section A-A. In fig. 1 and 2 is seen a transportation system 100 for transportation of large items in the form of flanges. The transportation system comprises a frame 4 having an extension in a longitudinal direction X, in a transversal direction Y and in a vertical direction Z.

The frame comprises two longitudinal girders 6,6' which are connected to a plurality of transversal support beams 8,8', 10,10', each of which comprises a lower surface 12 and an upper surface 14.

The primary support beams are arranged on the longitudinal girders 6,6' and comprise an upper surface 16. The area between the two primary support beams defines a storage area 18 for the large items.

As the primary support beams are arranged on an upper part of the longitudinal girders 6,6' and as the storage area 18 for the large items provides free access downwardly it is possible that large items may be arranged on top on the primary support beams in a vertical orientation and in an orientation in which the flange's horizontal diameter essentially is parallel with the longitudinal girders 6,6' and hence it is attained that that the large items can rest on the primary support beams 8,8' or 10,10' in a way where the bottom of the flanges extends all the way or almost all the way to the lower surface 12 of the girders. In this way space is saved in a vertical direction during storage and transport of the flanges.

The primary support beams 8,8' or 10,10' may in the general case carry a number of the large items, such as 4 - 26, for example 6 - 24, such as 8 - 22, for example 10 - 20, such as 12 - 18 or 14 - 16 large items in the form of flanges.

As the lower part of the frame 4 is having dimensions and locking mechanisms corresponding to a standard freight container the transportation system may be arranged and locked securely on top of a standard freight container. Herby the transportation system may be shipped as a container.

In fig. 2 is seen that the primary support beams 8,8',10,10' is pivoted into an orientation wherein their upper surface 16 is inclined inwardly towards the storage area 18 for the large items. In this way a larger contact surface and hence a lower pressure is being exerted on the large items, when these are resting on the support beams.

Fig. 1 and 2 also shows a number of secondary support beams 24. These are being stored on two storage beams 34 which are arranged outside the storage areas 18 for the large items.

Furthermore, fig. 1 and 2 show a number of pairs of brackets 22 for accommodation of secondary support beams 24. Each bracket 22 is arranged opposite to another on its respective longitudinal girder 6,6' at a position in a longitudinal direction X which corresponds to the storage area 18 for the large items 2.

It is seen that each bracket 22 comprises a number of cavities 26 which are arranged in a longitudinal direction X for accommodation an end 28 of a secondary support beam 24.

The secondary support beams 34 may be used for supporting, during transport or storage, of the large items 2 flanges, which are slightly smaller than the large items 2 being supported by the primary support beams 8,8',10,10'.

Hereby the space being available within the large items 2, which are being supported on the primary support beams 8,8', 10, 10', is utilised, when two sizes of flanges are to be stored or transported.

When the secondary support beams are not used, they may conveniently be stored on the storage beams 34.

In fig, 3a is shown in a side view the transportation system of fig. 1 and 2, in which the two storage areas 18 for the large items are accommodated by 15 flanges which rest on the two pairs of primary support beams 8,8' and 10,10' respectively.

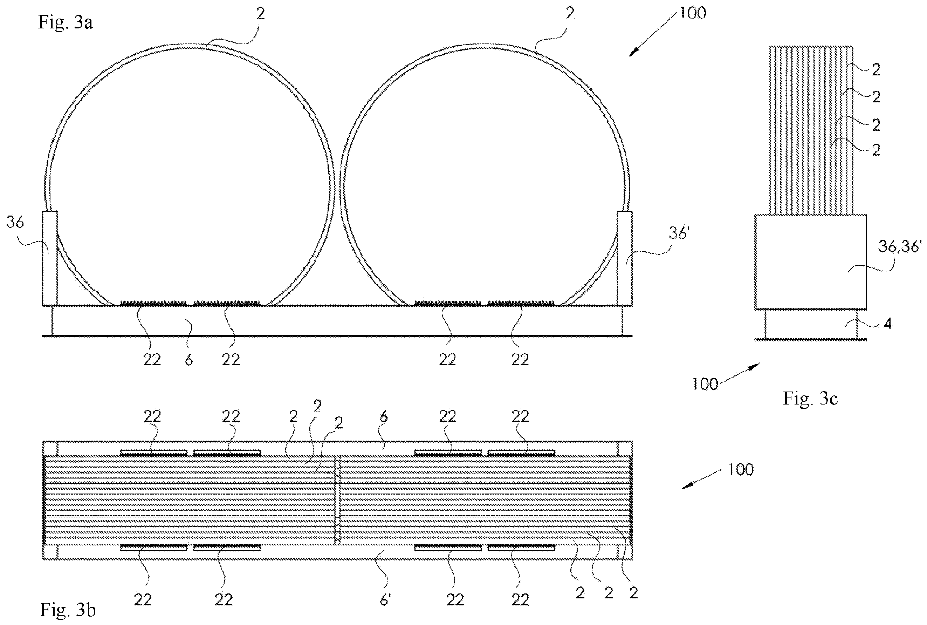

Fig. 3b shows this situation as seen from above and fig. 3c shows the same situation as seen in an end view.

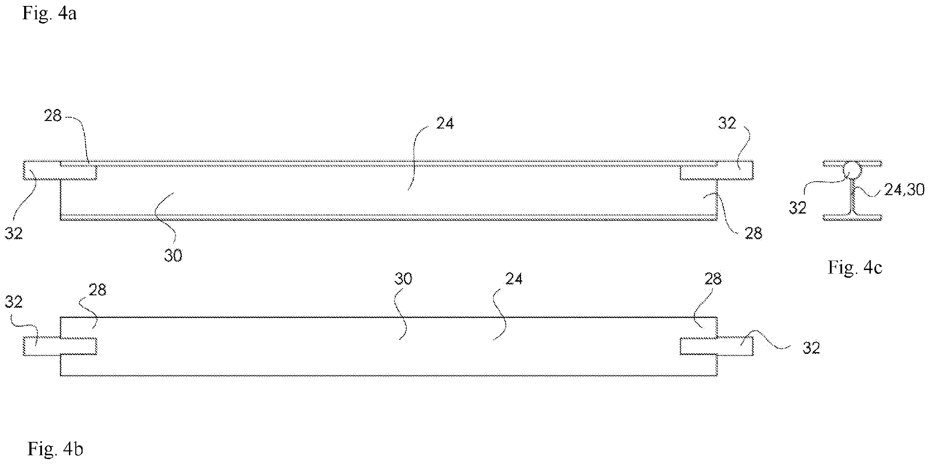

In fig. 4a, 4b and 4c are shown an example of a secondary support beam 24 for use with the transportation system according to the present invention, as seen in a side view, from above and in an end view, respectively.

This secondary support beam comprises an H-profile 30 which in each of its ends has welded on a cylindrical bar 32.

Accordingly, the secondary support beams 24 are loose and the distance between pairs of secondary support beams 24, during use for transport, may be adjusted, by selecting the mutual distance via placement in the appropriate cavities 26 in the brackets 22.

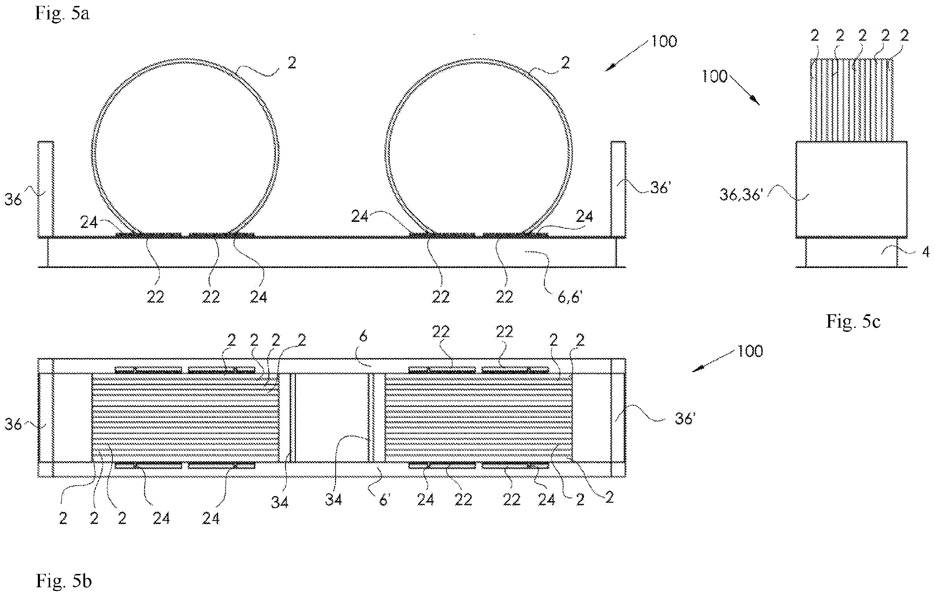

In fig. 5a is shown, seen in a side view, the transportation system of fig. 1 and 2, in which the two storage areas 18 for the large items are accommodated by 15 flanges, which are resting on the two pairs of secondary support beams 24.

Fig. 5b shows this situation as seen from above and fig. 5c shows the same situation as seen in an end view.

The flanges being shown in fig. 5a, 5b and 5c are smaller than the flanges being shown in fig. 3a, 3b and 3c.

The two situations being depicted in fig. 3a, 3b and 3c on the one hand, and in fig. 5a, 5b and 5c on the other hand may be combined in that first, the large flanges 2 in a way illustrated in fig. 3a, 3b and 3c are mounted, and subsequently mounting the slightly smaller flanges 2, being illustrated in fig. 5a, 5b and 5c, within the larger flanges.

The large items in the form of flanges, may be tethered to the transportation system by using a number of bolts 40, nuts 42 and flexible mounting means 44, such as wires, chains, straps or ropes (not illustrated in the drawings), wherein each bolt being configured to be mounted in through-going holes in one or more large items in the form of flanges 2, and wherein the fastening means are being configured to allow fastening of one or more large items in the form of flanges in an upright orientation to the transportation system, when the item(s) rest(s) on the transversal primary support beams 8,8',10,10' and/or on the secondary support beams 24.

Moreover, the transportation system according to the present invention may comprise one or more spacers for being arranged between flanges for attaining further safety and fixation of the large items in the form of flanges.

### References to figures

- 2: Large items in the form of flanges
- 4: Frame
- 5,5': End of frame
- 6,6': Longitudinal girder
- 8,8',10,10': Transversal primary support beams
- 12: Lower surface of longitudinal girder
- 14: Upper surface of longitudinal girder
- 16: Upper surface of primary support beam
- 18: Storage area for large item
- 20: Proximal points on upper surface of primary support beams
- 22: Bracket for accommodation of secondary support beams
- 24: Secondary support beam
- 26: Cavity in bracket for accommodation of secondary support beam
- 28: End of secondary support beam
- 30: H-profile of secondary support beam
- 32: Cylindrical bar of secondary support beam
- 34: Storage beam for storing secondary support beams
- 36,36': End wall of frame
- 38,38': Means for pivoting end wall
- 40: Bolt
- 42: Nut
- 44: Flexible fastening means
- 100: Transportation system

## Claims

1. A transportation system (100) for transportation of large items in the form of flanges (2), wherein said transportation system comprises:
a frame (4) having an extension in a longitudinal direction (X), in a transversal direction (Y) and in a vertical direction (Z);
wherein said frame comprises two longitudinal girders (6,6'), which are connected to a one or
more pairs of primary support beams (8,8', 10,10');
wherein said primary support beams are being arranged on an upper part of said longitudinal girders (6,6');
wherein said longitudinal girders comprise a lower surface (12) and an upper surface (14);
wherein said transversal primary support beams comprise an upper surface (16);
wherein the area between two transversal primary support beams defines a storage area (18) for said large items in the form of flanges;
wherein free access in a downward direction, all the way down to the height of the lower surface of the longitudinal girders, is provided for said flanges in the storage area (18) for the large items in the form of flanges;
wherein the lower part of the frame (4) is having dimensions and locking mechanisms corresponding to a freight container; thereby allowing the transportation system to be arranged and locked in place safely on top of a freight container;
**characterized in that** the frame (4) comprises a number of pairs of brackets (22) for accommodating secondary support beams (24); and
that each bracket (22) is being arranged opposite to another on its respective longitudinal girder (6,6') at a position in a longitudinal direction (X), corresponding to said storage area (18) for the large items in the form of flanges (2); and
that each bracket comprises a number of cavities (26) which are being arranged in a longitudinal direction (X) for accommodating an end (28) of a secondary support beam (24);
and
that the number of pairs of brackets is being 2 or more in respect of each storage area (18) for the large items in the form of flanges; and
that said transportation system furthermore comprising one or more pairs of secondary support beams (24);
thereby allowing storage and transportation of two sizes of flanges in such a way that the larger flanges are resting on a pair of primary support beams, and the smaller flanges being arranged within the larger flanges, wherein the smaller flanges are resting on a pair of these secondary support beams.

2. A transportation system (100) according to claim 1, wherein the upper surface (16) of the primary support beams is being arranged on the longitudinal girders in a height corresponding to at least 50 %, such as 55 %, such as at least 60 %, for example at least 65 %, such as at least 70 %, for example at least 75 %, such as at least 80 %, such as at least 85 % or at least 90% of the extension, in a vertical direction, of the longitudinal girders.

3. A transportation system (100) according to claim 1 or 2, wherein the upper surface (16) of the primary support beams is being arranged on the longitudinal girders in a height above the longitudinal girder's lower surface (12) of 300 mm or more, such as 350 mm or more, such as 400 mm or more, for example 450 mm or more, such as 500 mm or more, such as 550 mm or more, for example 600 mm or more.

4. A transportation system (100) according to any of the preceding claims, wherein the number of pairs of primary support beams is being 1, 2, 3 or 4.

5. A transportation system (100) according to any of the preceding claims, wherein the upper surface (16) of each primary support beam is inclined inwardly towards the storage area (18) for the large items in the form of flanges.

6. A transportation system according to claim 5, wherein the upper surface (16) of each of the primary support beams is inclined inwardly towards the storage area (18) for the large items in the form of flanges at an angle, relative to horizontal, of 5 - 40°, such as 10 - 35°, for example 15 - 30°, such as 20 - 25°.

7. A transportation system (100) according to any of the preceding claims, wherein the mutual distance, in a longitudinal direction (X), between the most proximal points (20) on the upper surface (16) of the primary support beams of a pair of support beams is being 2000 - 3500 mm, such as 2100 - 3400 mm, such as 2200 - 3300 mm, for example 2300 - 3200 mm, such as 2200 - 3100 mm, for example 2300 - 3000 mm, for example 2400 - 2900 mm, such as 2500 - 2800 mm or 2600 - 2700 mm.

8. A transportation system (100) according to any of the preceding claims, wherein the extension, in a vertical direction (Z), of the longitudinal girders (6,6') is being 300 - 900 mm, such as 400 - 800 mm, for example 500 - 600 mm.

9. A transportation system (100) according to any of the preceding claims, wherein the primary support beams (8,8',10,10') are being arranged, in longitudinal (X) and vertical (Z) position, on the longitudinal girders (6,6') in such a way that a flange (2) which is being arranged vertically on the support beams and which is arranged in a longitudinal orientation (X), does not extend beyond the longitudinal extension of the frame (4), in a situation in which the flanges are having a diameter of up to 9 m.

10. A transportation system (100) according to any of the preceding claims, wherein the lower part of the frame (4) is having dimensions and locking mechanisms corresponding to a standard freight container, such as a standard 6,1 meter or a standard 12 meter freight container, such as a "flat rack" container; such as conventionally and/or traditionally used for transportation by ship.

11. A transportation system (100) according to claim 10 which, in relation to the dimensions and locking mechanism of the lower part of the frame, complies with the ISO 668:2013 standard and/or the ISO 1496-1:2013 standard.

12. A transportation system (100) according to any of the preceding claims, wherein each secondary support beam (24) comprises an H-profile (28) having welded thereon cylindrical bars (30) in each end thereof.

13. A transportation system (100) according to any of the preceding claims, wherein the frame (4) comprises a pair of storage beams (34) for storing one or more pairs of the secondary support beams (24); the storage beams preferably being arranged on the longitudinal girders (6,6') at a position outside the storage area (18) for the large items in the form of flanges (2).

14. A transportation system (100) according to any of the preceding claims, wherein the frame (4) in its end(s) (5,5') comprises one or two end wall(s) (36,36').

15. A transportation system (100) according to claim 14 wherein the end wall(s) (36,36') comprise(s) means for pivoting said end wall(s) between a vertical, upright configuration and a horizontal, inwardly folded-down configuration and vice versa.

16. A transportation system (100) according to claim 14 or 15 wherein the end wall(s) (36,36') is/are having dimensions and locking mechanism corresponding to a standard 6,1 meter or 12 meter freight container.

17. A transportation system (100) according to any of the preceding claims, wherein each primary support beam (8,8',10,10') of one or more pairs of the primary support beams is being pivotally suspended, via pivoting mechanisms, such as suspension bearings, on said longitudinal girders (6,6') in such a way that they are able to being rotated around their longitudinal axes.

18. A transportation system (100) according to any of the preceding claims comprising two primary support beams (8,8',10,10'), wherein at least one primary support beam (8,8',10,10') is being movably mounted on the longitudinal girders (6,6') via fastening means therefor.

19. A transportation system (100) according to any of the preceding claims furthermore comprising a number of bolts (40), nuts (42) and flexible fastening means (44), such as wires, chains, straps or ropes, wherein each bolt is being configured for fastening in through-going holes in one or more flanges, and wherein the fastening means are being configured for allowing fastening of one or more flanges, in an upright orientation, to the transportation system, when the flange(s) is/are resting on the transversal primary support beams (8,8',10,10') and/or the secondary support beams (24).

20. Use of a transportation system (100) according to any of the preceding claims for transportation of large items in the form of flanges (2).

## Patentansprüche

1. Transportsystem (100) für den Transport großer Artikel in Form von Flanschen (2), wobei das Transportsystem umfasst:
einen Rahmen (4), der eine Erstreckung in einer Längsrichtung (X), in einer Querrichtung (Y) und in einer vertikalen Richtung (Z) aufweist;
wobei der Rahmen zwei Längsträger (6, 6') umfasst, die mit einem oder mehr Paaren von Primärstützbalken (8, 8', 10, 10') verbunden sind;
wobei die Primärstützbalken auf einem oberen Teil der Längsträger (6, 6') angeordnet sind;
wobei die Längsträger eine untere Fläche (12) und eine obere Fläche (14) umfassen;
wobei die querlaufenden Primärstützbalken eine obere Fläche (16) umfassen;
wobei die Fläche zwischen zwei querlaufenden Primärstützbalken eine Lagerfläche (18) für die großen Artikel in der Form von Flanschen definiert;
wobei freier Zugang in einer Abwärtsrichtung, bis hinunter auf die Höhe der unteren Fläche der Längsträger für die Flansche auf der Lagerfläche (18) für die großen Artikel in der Form von Flanschen bereitgestellt ist;
wobei der untere Teil des Rahmens (4) Abmessungen und Verriegelungsmechanismen aufweist, die einem Frachtcontainer entsprechen; wodurch es dem Transportsystem möglich ist, vor Ort sicher auf der Oberseite eines Frachtcontainers angeordnet und verriegelt zu werden;
**dadurch gekennzeichnet, dass** der Rahmen (4) eine Anzahl von Halterungspaaren (22) zum Aufnehmen von Sekundärstützbalken (24) umfasst; und
dass jede Halterung (22) entgegengesetzt zum anderen auf seinem jeweiligen Längsträger (6, 6') in einer Position in einer Längsrichtung (X) angeordnet ist, die der Lagerfläche (18) für die großen Artikel in der Form von Flanschen (2) entspricht; und
dass jede Halterung eine Anzahl von Hohlräumen (26) umfasst, die in einer Längsrichtung (X) zum Aufnehmen eines Endes (28) eines Sekundärstützbalkens (24) angeordnet sind;
und
dass die Anzahl von Halterungspaaren 2 oder mehr in Bezug auf jede Lagerfläche (18) für die großen Artikel in der Form von Flanschen ist; und
das Transportsystem darüber hinaus ein oder mehr Paare von Sekundärstützbalken (24) umfasst;
wodurch die Lagerung und der Transport von zwei Größen von Flanschen derart erlaubt wird, dass die größeren Flansche auf einem Paar von Primärstützbalken bleiben und die kleineren Flansche innerhalb der größeren Flansche angeordnet sind, wobei die kleineren Flansche auf einem Paar dieser Sekundärstützbalken bleiben.

2. Transportsystem (100) nach Anspruch 1, wobei die obere Fläche (16) der Primärstützbalken auf den Längsträgern in einer Höhe entsprechend mindestens 50%, wie 55%, wie mindestens 60%, beispielsweise mindestens 65%, wie mindestens 70%, beispielsweise mindestens 75%, wie mindestens 80%, wie mindestens 85% oder mindestens 90% der Erstreckung in einer vertikalen Richtung der Längsträger angeordnet ist.

3. Transportsystem (100) nach Anspruch 1 oder 2, wobei die obere Fläche (16) der Primärstützbalken auf den Längsträgern in einer Höhe über der unteren Fläche (12) der Längsträger von 300 mm oder mehr, wie 350 mm oder mehr, wie 400 mm oder mehr, beispielsweise 450 mm oder mehr, wie 500 mm oder mehr, wie 550 mm oder mehr, beispielsweise 600 mm oder mehr angeordnet ist.

4. Transportsystem (100) nach einem der vorstehenden Ansprüche, wobei die Anzahl von Paaren von Primärstützbalken 1, 2, 3 oder 4 ist.

5. Transportsystem (100) nach einem der vorstehenden Ansprüche, wobei die obere Fläche (16) jedes Primärstützbalkens nach innen zu der Lagerfläche (18) für die großen Artikel in der Form von Flanschen geneigt ist.

6. Transportsystem nach Anspruch 5, wobei die obere Fläche (16) jedes der Primärstützbalken nach innen zu der Lagerfläche (18) für die großen Artikel in der Form von Flanschen in einem Winkel relativ zur Horizontalen von 5-40°, wie 10-35°, beispielsweise 15-30°, wie 20-25° geneigt ist.

7. Transportsystem (100) nach einem der vorstehenden Ansprüche, wobei der gegenseitige Abstand in einer Längsrichtung (X) zwischen den proximalsten Punkten (20) auf der oberen Fläche (16) der Primärstützbalken eines Paares von Stützbalken 2000-3500 mm, wie 2100-3400 mm, wie 2200-3300 mm, beispielsweise 2300-3200 mm, wie 2200-3100 mm, beispielsweise 2300-3000 mm, beispielsweise 2400-2900 mm, wie 2500-2800 mm oder 2600-2700 mm ist.

8. Transportsystem (100) nach einem der vorstehenden Ansprüche, wobei die Erstreckung in einer vertikalen Richtung (Z), der Längsträger (6, 6') 300-900 mm, wie 400-800 mm, beispielsweise 500-600 mm ist.

9. Transportsystem (100) nach einem der vorstehenden Ansprüche, wobei die Primärstützbalken (8, 8', 10, 10') in Längs- (X), vertikaler (Z) Position auf den Längsträgern (6, 6') derart angeordnet sind, dass ein Flansch (2), der vertikal auf den Stützbalken angeordnet ist, und der in einer Längsausrichtung (X) angeordnet ist, sich nicht über die Längserstreckung des Rahmens (4) in einer Situation erstreckt, in der die Flansche einen Durchmesser von bis zu 9 m aufweisen.

10. Transportsystem (100) nach einem der vorstehenden Ansprüche, wobei der untere Teil des Rahmens (4) Abmessungen und Verriegelungsmechanismen aufweist, die einem Standard-Frachtcontainer entsprechen, wie ein Standard 6,1 Meter- oder ein Standard 12 Meter-Frachtcontainer, wie ein "Flat-Rack"-Container; wie herkömmlich und/oder traditionell für einen Transport per Schiff verwendet.

11. Transportsystem (100) nach Anspruch 10, das in Bezug auf die Abmessungen und den Verriegelungsmechanismus des unteren Teils des Rahmens dem Standard ISO 668:2013 und/ oder dem Standard ISO 1496-1:2013 entspricht.

12. Transportsystem (100) nach einem der vorstehenden Ansprüche, wobei jeder Sekundärstützbalken (24) ein H-Profil (28) umfasst, das darauf verschweißt zylindrische Stangen (30) an jedem Abschluss davon aufweist.

13. Transportsystem (100) nach einem der vorstehenden Ansprüche, wobei der Rahmen (4) ein Paar von Lagerbalken (34) zum Lagern von einem oder mehr Paaren der Sekundärstützbalken (24) umfasst; wobei die Lagerbalken vorzugsweise auf den Längsträgern (6, 6') in einer Position außerhalb der Lagerfläche (18) für die großen Artikel in der Form von Flanschen (2) angeordnet sind.

14. Transportsystem (100) nach einem der vorstehenden Ansprüche, wobei der Rahmen (4) an seinem (seinen) Abschluss (Abschlüssen) (5, 5') eine oder zwei Abschlusswände (36, 36') umfasst.

15. Transportsystem (100) nach Anspruch 14, wobei die Abschlusswand (-wände) (36, 36') Mittel zum Schwenken der Abschlusswände zwischen einer vertikalen, aufrechten Konfiguration und einer horizontalen, einwärts nach unten gefalteten Konfiguration und umgekehrt umfasst (-en).

16. Transportsystem (100) nach Anspruch 14 oder 15, wobei die Abschlusswand (-wände) (36, 36') Abmessungen und einen Verriegelungsmechanismus aufweist (-en), die einem Standard 6,1 Meter oder 12 Meter Frachtcontainer entsprechen.

17. Transportsystem (100) nach einem der vorstehenden Ansprüche, wobei jeder Primärstützbalken (8, 8', 10, 10') von einem oder mehr Paaren von Primärstützbalken über Schwenkmechanismen, wie Aufhängungslager, derart schwenkbar auf den Längsträgern (6, 6') aufgehängt ist, dass sie imstande sind, um ihre Längsachsen herum gedreht zu werden.

18. Transportsystem (100) nach einem der vorstehenden Ansprüche, zwei Primärstützbalken (8, 8', 10, 10') umfassend, wobei mindestens ein Primärstützbalken (8, 8', 10,10') über Befestigungsmittel dafür beweglich auf den Längsträgern (6, 6') montiert ist.

19. Transportsystem (100) nach einem der vorstehenden Ansprüche, weiter eine Anzahl von Bolzen (40), Muttern (42) und flexiblen Befestigungsmitteln (44), wie Drähte, Ketten, Gurte oder Seile umfassend, wobei jeder Bolzen zum Befestigen in Durchgangslöchern in einem oder mehr Flanschen konfiguriert ist, und wobei die Befestigungsmittel konfiguriert sind, um es zu ermöglichen, einen oder mehr Flansche in einer aufrechten Ausrichtung an dem Transportsystem zu befestigen, wenn der (die) Flansch(e) auf den querlaufenden Primärstützbalken (8, 8', 10, 10') und/ oder dem Sekundärstützbalken (24) bleibt.

20. Verwendung eines Transportsystems (100) nach einem der vorstehenden Ansprüche zum Transportieren von großen Artikeln in Form von Flanschen (2).

## Revendications

1. Système de transport (100) pour le transport de grands articles sous la forme de brides (2), dans lequel ledit système de transport comprend :
un cadre (4) ayant une extension dans un sens longitudinal (X), dans un sens transversal (Y) et dans un sens vertical (Z) ;
dans lequel ledit cadre comprend deux longerons longitudinaux (6,6'), qui sont reliés à une ou plusieurs paires de poutres d'appui principales (8,8', 10,10') ;
dans lequel lesdites poutres d'appui principales sont agencées sur une partie supérieure desdits longerons longitudinaux (6,6') ;
dans lequel lesdits longerons longitudinaux comprennent une surface inférieure (12) et une surface supérieure (14) ;
dans lequel lesdites poutres d'appui principales transversales comprennent une surface supérieure (16) ;
dans lequel la zone entre deux poutres d'appui principales transversales définissent une zone de stockage (18) pour lesdits grands articles sous la forme de brides ;
dans lequel un accès libre dans un sens vers le bas, jusqu'à la hauteur de la surface inférieure des longerons longitudinaux, est prévu pour lesdites brides dans la zone de stockage (18) pour les grands articles sous la forme de brides ;
dans lequel la partie inférieure du cadre (4) a des dimensions et des mécanismes de verrouillage correspondant à un conteneur de fret ; en permettant de ce fait au système de transport d'être agencé et verrouillé en place en toute sécurité au-dessus d'un conteneur de fret ;
**caractérisé en ce que** le cadre (4) comprend un nombre de paires de supports (22) pour recevoir des poutres d'appui secondaires (24) ; et
**en ce que** chaque support (22) est agencé à l'opposé l'un de l'autre sur son longeron longitudinal (6,6') respectif à une position dans un sens longitudinal (X), correspondant à ladite zone de stockage (18) pour les grands articles sous la forme de brides (2) ; et
**en ce que** chaque support comprend un nombre de cavités (26) qui sont agencées dans un sens longitudinal (X) pour recevoir une extrémité (28) d'une poutre d'appui secondaire (24) ; et
**en ce que** le nombre de paires de supports est supérieur ou égale à deux en ce qui concerne chaque zone de stockage (18) pour les grands articles sous la forme de brides ; et
**en ce que** ledit système de transport comprend en outre une ou plusieurs paires de poutres d'appui secondaires (24) ;
en permettant de fait le stockage et le transport de deux tailles de brides de telle manière que les grandes brides reposent sur une paire de poutres d'appui principales, et les petites brides soient agencées à l'intérieur des grandes brides, dans lequel les petites brides reposent sur une paire de ces poutres d'appui secondaires.

2. Système de transport (100) selon la revendication 1, dans lequel la surface supérieure (16) des poutres d'appui principales est agencée sur les longerons longitudinaux à une hauteur correspondant à au moins 50 %, comme 55 %, comme au moins 60 %, par exemple au moins 65 %, comme au moins 70 %, par exemple au moins 75 %, comme au moins 80 %, comme au moins 85 % ou au moins 90 % de l'extension, dans un sens vertical, des longerons longitudinaux.

3. Système de transport (100) selon la revendication 1 ou 2, dans lequel la surface supérieure (16) des poutres d'appui principales est agencée sur les longerons longitudinaux à une hauteur au-dessus de la surface inférieure de longeron longitudinal (12) de 300 mm ou plus, comme 350 mm ou plus, comme 400 mm ou plus, par exemple 450 mm ou plus, comme 500 mm ou plus, comme 550 mm ou plus, par exemple 600 mm ou plus.

4. Système de transport (100) selon l'une quelconque des revendications précédentes, dans lequel le nombre de paires de poutres d'appui principales est 1, 2, 3 ou 4.

5. Système de transport (100) selon l'une quelconque des revendications précédentes, dans lequel la surface supérieure (16) de chaque poutre d'appui principale est inclinée vers l'intérieur vers la zone de stockage (18) pour les grands articles sous la forme de brides.

6. Système de transport selon la revendication 5, dans lequel la surface supérieure (16) de chacune des poutres d'appui principales est inclinée vers l'intérieur vers la zone de stockage (18) pour les grands articles sous la forme de brides à un angle, par rapport à l'horizontale, de 5 à 40°, comme de 10 à 35°, par exemple de 15 à 30°, comme de 20 à 25°.

7. Système de transport (100) selon l'une quelconque des revendications précédentes, dans lequel la distance mutuelle, dans un sens longitudinal (X), entre les points les plus proximaux (20) sur la surface supérieure (16) des poutres d'appui principales d'une paire de poutres d'appui est de 2000 à 3500 mm, comme de 2100 à 3400 mm, comme de 2200 à 3300 mm, par exemple de 2300 à 3200 mm, comme de 2200 à 3100 mm, par exemple de 2300 à 3000 mm, par exemple de 2400 à 2900 mm, comme de 2500 à 2800 mm ou de 2600 à 2700 mm.

8. Système de transport (100) selon l'une quelconque des revendications précédentes, dans lequel l'extension, dans un sens vertical (Z), des longerons longitudinaux (6,6') est de 300 à 900 mm, comme de 400 à 800 mm, par exemple de 500 à 600 mm.

9. Système de transport (100) selon l'une quelconque des revendications précédentes, dans lequel les poutres d'appui principales (8,8', 10,10') sont agencées, dans des positions longitudinale (X) et verticale (Y), sur les longerons longitudinaux (6,6') de telle manière qu'une bride (2), qui est agencée verticalement sur les poutres d'appui et qui est agencée dans une orientation longitudinale (X), ne s'étende pas au-delà de l'extension longitudinale du cadre (4), dans une situation dans laquelle les brides ont diamètre jusqu'à 9 m.

10. Système de transport (100) selon l'une quelconque des revendications précédentes, dans lequel la partie inférieure du cadre (4) a des dimensions et des mécanismes de verrouillage correspondant à un conteneur de fret standard, comme un conteneur de fret standard de 6,1 mètres ou de 12 mètres, comme un conteneur « flat rack » ; tels que ceux conventionnellement et/ou traditionnellement utilisés pour le transport par bateau.

11. Système de transport (100) selon la revendication 10 qui, en ce qui concerne les dimensions et le mécanisme de verrouillage de la partie inférieure du cadre, est conforme à la norme ISO 668:2013 et/ou à la norme ISO 1496-1:2013.

12. Système de transport (100) selon l'une quelconque des revendications précédentes, dans lequel chaque poutre d'appui secondaire (24) comprend un profilé en H (28) sur lequel sont soudées des barres cylindriques (30) à chaque extrémité de celui-ci.

13. Système de transport (100) selon l'une quelconque des revendications précédentes, dans lequel le cadre (4) comprend une paire de poutres de stockage (34) pour stocker une ou plusieurs paires de poutres d'appui secondaires (24) ; les poutres de stockage étant de préférence agencées sur les longerons longitudinaux (6,6') à une position à l'extérieur de la zone de stockage (18) pour les grands articles sous la forme de brides (2).

14. Système de transport (100) selon l'une quelconque des revendications précédentes, dans lequel le cadre (4) à son (ses) extrémité(s) (5,5') comprend une ou deux parois d'extrémité (36,36').

15. Système de transport (100) selon la revendication 14, dans lequel l'une ou les deux parois d'extrémité (36,36') comprennent des moyens de pivotement desdites parois d'extrémité entre une configuration droite verticale et une configuration horizontale repliée vers l'intérieur et vice versa.

16. Système de transport (100) selon la revendication 14 ou 15, dans lequel l'une ou les deux parois d'extrémité (36,36') ont des dimensions et un mécanisme de verrouillage correspondant à un conteneur de fret standard de 6,1 mètres ou de 12 mètres.

17. Système de transport (100) selon l'une quelconque des revendications précédentes, dans lequel chaque poutre d'appui principale (8,8', 10,10') d'une ou plusieurs paires des poutres d'appui principales est suspendue, de manière à pouvoir pivoter, par l'intermédiaire de mécanismes de pivotement, comme des paliers de suspension, sur lesdits longerons longitudinaux (6,6') de manière à pouvoir tourner autour de leurs axes longitudinaux.

18. Système de transport (100) selon l'une quelconque des revendications précédentes comprenant deux poutres d'appui principales (8,8', 10,10'), dans lequel au moins une poutre d'appui principale (8,8', 10,10') est montée, de manière à pouvoir se déplacer, sur les longerons longitudinaux (6,6') par l'intermédiaire de moyens de fixation de celle-ci.

19. Système de transport (100) selon l'une quelconque des revendications précédentes, comprenant en outre un certain nombre de boulons (40), d'écrous (42) et de moyens de fixation souples (44), comme des fils, des chaînes, des sangles ou des cordes, dans lequel chaque boulon est configuré pour se fixer dans des trous traversants dans une ou plusieurs brides, et dans lequel les moyens de fixation sont configurés pour permettre la fixation d'une ou plusieurs brides, dans une orientation droite, sur le système de transport, lorsque la ou les brides reposent sur les poutres d'appui principales transversales (8,8', 10,10') et/ou sur les poutres d'appui secondaires (24).

20. Utilisation d'un système de transport (100) selon l'une quelconque des revendications précédentes pour le transport de grands articles sous la forme de brides (2).
